# EUROPEAN PATENT APPLICATION

(11) **EP 3 587 478 A1**
(43) Date of publication of application: **01.01.2020**
(21) Application number: 19179291.0
(22) Date of filing: 10.06.2019
(51) Int. Cl.: C08J 5/18, C08K 3/04, C08L 67/02

(54) **PROCESS FOR OBTAINING A BIOPLASTIC FILM AND GRAPHENE OXIDE AND/OR GRAPHENE**

(30) Priority: 24.06.2018 PT 2018110802
(71) Applicant: Viana, Octávio, 4400-135 Vila Nova de Gaia (PT); Sandri, Enrico, 36030 Sarcedo (IT)
(72) Inventor: Viana, Octávio, 4400-135 Vila Nova de Gaia (PT); Sandri, Enrico, 36030 Sarcedo (IT)

(57) **Abstract**

The bioplastic film and graphene and/or graphene oxide is characterized by having high strength, excellent waterproofing and high antibacterial performance. Thus, it can be used in the manufacture of garbage bags, bottles, capsules and packaging for the distribution foodstuffs, liquids or substances intended for human consumption or animals, in particular medicinal products.

In addition to the advantages described above, the present invention provides a bioplastic film with improved strength and mechanical performance compared to current bioplastic film solutions, thus allowing the current polyethylene terephthalate packaging solutions to be replaced by a fully biodegradable and compostable bioplastic.

This invention is characterized by adding graphene and/or graphene oxide to the bioplastic (through a melting process) in which the graphene and/or graphene oxide are dispersed fairly homogeneously within the bioplastic ensuring the properties and characteristics described above, which in the current state of the art are not possible to obtain.

## Description

### Field of the invention:

Bioplastic, such as MATER-BI developed by the Italian company Novamont S.p.A, is a material used to provide solutions with low environmental impact in the manufacture of products such as bags, bags for organic waste, nets for fruit and vegetables, cutlery, bottles and packaging used for the distribution of liquid food products (e.g. milk, yogurts or fruit juices) and medicines.

Graphene is a crystalline form of carbon of two dimensions, characterized by a layer of carbon atoms, with the thickness of a single atom, with covalent bonds and arranged in a hexagonal shape which tends to have a stronger bond than other types of structures.

Graphene oxide is a layered material produced through a particular oxidation process of graphite, which makes the material highly oxygenated and hydrophilic.

This invention is a film of bioplastic and graphene and/or graphene oxide that can be used in the manufacture of garbage bags, bottles and packaging used for the distribution of food products, in particular liquids, and or medicines. The material has an impermeability and hence avoids the need of one or more layers of aluminum film in the lamination of the material for bottles and/or packages used for the distribution of food products, resulting in cost reduction as well as better antibacterial properties. It also allows the use of a bioplastic instead of the current solutions that involve using polyethylene terephthalate, a non-biodegradable material.

This invention involves adding between 1.25% to 3.90 % graphene and/or graphene oxide (1) to the bioplastic (2) during the extrusion process.

Although not evident even for a technician or professional skilled in extrusion processes, the addition of more than 3.90 % graphene and/or graphene oxide (1) to the bioplastic (2) during the extrusion process increases the viscosity making the extrusion process impossible (and the good dispersion of graphene and graphene oxide in the bioplastic is impossible because the graphene and graphene oxide has a tendency to reaggregate during the extrusion process when the amount of graphene or graphene oxide used is above 4% mass per mass, resulting in a product with faults and worse impermeability); the amount of graphene and/or graphene oxide (1) mixing the bioplastic (2) was the major challenge overcome during the discovery of this product.

### State of Art:

There are several bottles and forms of packaging used for the distribution of food products, in particular liquids, that are made of polyethylene terephthalate, but which are not suitable for prolonged contact with food products and liquids in particular (e.g. milk, yogurts, fruit juices and edible oils).

There are also many products such as bags, garbage bags, fruit and vegetable nets, paper packages, glasses, napkins, plates, cutlery, coffee capsules, cups and spoons made of bioplastic, that are not suitable for prolonged contact with food products, in particular liquids (e.g. milk, yoghurts, fruit juices and edible oils) due to very poor impermeability of the bioplastic. For example, the coffee capsules manufactured in bioplastic do not allow efficient conservation of coffee for long periods (months) due to permeability problems.

Attempts have been made to overcome the disadvantage described of the bottles and packaging used for the distribution of food products made of polyethylene terephthalate by the application of one or more layers of resistant plastic material, for example the copolymer ethylene and partially neutralized acrylic acid molded by blowing. However, when applied by extrusion into the bottle or carton, its properties deteriorate when in prolonged contact with certain food products and cracks may appear when the material is compressed or folded. The extrusion process apparently worsens the properties of the bottles and/or packages when compared to the blowing process, because the processing temperature is considerably higher (between 100 and 150°C).

There are other techniques, by applying one or more layers of different plastics and/or aluminum bonded together by adhesion layers, resulting in bottles or plastic containers capable of being in prolonged contact with certain food products.

Plastic bottles or packages containing graphene already exist, and are also produced by a technique which involves the application of a layer of graphene film (for this example see US patents 20130236715 A1, published on September 12, 2013 , EP 2489520 A2, published on August 22, 2012, WO 2013004718 A1, published January 10, 2013), or by different compression, absorption and/or injection techniques instead of fusion by means of an extrusion technique as presented (for this example see patents WO 2012151433 A2, published November 8, 2012, CN 102795619 A, published November 28, 2012). There are still other techniques that use heat (but not by means of an extrusion technique) with the aim of producing an ethylene-modified polyethylene terephthalate material which may subsequently enable the production of such films (for this example see patent CN 103044865 A, published April 17, 2013).

Unlike polyethylene terephthalate, there is no known attempt at making bioplastic impermeable and increasing the strength of the final product (whether for packaging, bags or nets) by any of the techniques mentioned above. All the aforementioned techniques are less likely to be used on bioplastic because of deformities and cracks that would result from them (far greater than those occurring in polyethylene terephthalate).

In other words, all of the existing techniques, even those in which an efficient solution is found for the manufacture of bottles or containers capable of being used for the prolonged distribution and storage of food products and / or medicaments, the technique used consists of applying layers on or in the interior of the polyethylene terephthalate by means of injection or absorption of the graphene. And, in none of them is bioplastic used.

However, the product achieved by the injection or absorption techniques mentioned, which are as close as possible to the present invention, do not achieve a final product with the characteristics of the present invention, in particular with regard to the impermeability, homogeneity and importantly, antibacterial performance.

The technique of graphene absorption or injection results in a final product with dimensional stability (when exposed to high temperature)lower than that obtained using the extrusion method.

### Polyethylene terephthalate:

The tensile-strain response of graphene nanoparticles and polyethylene terephthalate shows 8.5% and 9% bursts in the molecular mechanics simulations, and 6.5% and 7% in the molecular dynamics of the product obtained by means of a process based on the injection and absorption techniques respectively. The product obtained by the process of this invention using the extrusion method shows 0.5% and 0.5% bursts in molecular dynamics when subjected to a test under the same conditions. The lower voltage obtained from the molecular dynamics compared to the molecular mechanics in the tests on the product obtained by an injection and absorption technique suggests that the verified mechano-chemical transformation is more favorable at room temperature, as opposed to what is found with extrusion. The bursts formed in the product obtained by means of an injection and absorption technique remained after the molecular mechanics stress test, showing that the reaction is irreversible, and the deformation is plastic. However, in the case of the product obtained by the technique of this invention, reversion is approximately 80%.

In addition, the product obtained through the technique used in this invention has a 40% higher structural homogeneity than the other processes mentioned above.

### Bioplastic:

Although there are no bioplastic and graphene and/or graphene oxide products, and no literature to support this option, the tests carried out allow us to state that the tensile-strain response of the graphene and polyethylene terephthalate nanoparticles showed bursts of 10 % and 12% in the molecular mechanics simulations and showed bursts of 7% and 9% in the molecular dynamics of the product obtained through a process based on injection and absorption techniques respectively. When the product was obtained by the process of this invention, using extrusion, it showed bursts of 1% in molecular dynamics when subjected to a test under the same conditions. The lower voltage obtained from the molecular dynamics compared to the molecular mechanics in the tests on the product obtained by an injection and absorption technique suggests that the verified mechano-chemical transformation is more favorable at room temperature, contrary to the extrusion technique. The bursts formed in the product obtained by means of an injection and absorption technique remained after the molecular mechanics stress test showing that this reaction is irreversible and that the deformation is plastic, whereas in the case of the product obtained by this novel technique, reversion is approximately 60%.

In addition, the product obtained by the technique of this invention has a structural homogeneity that is 40% higher than the other processes mentioned above, and can been improve to reach a structural homogeneity 800% higher than the other *supra* mentioned processes (e.g. by adding the graphene and/or the graphene oxide in the middle or end of the compression zone of the screw or beginning of the metering zone of the screw - equivalent to the beginning of the last third part of the screw-, when the bioplastic pallets are already melted, instead in the funnel, in the beginning of the process, and/or using a screw with extra divisions ready to mix nanoparticles).

Therefore, it can be concluded that the quality of the product obtained by this invention is far superior to the quality of the injected or absorbed part due to the degradation of the polyethylene terephthalate and/or of the bioplastic in during the injection or absorption process (it's important to note that using bioplastic alone in a injection blow moulding process is impossible - the packages burst when they are blown -, and only the addition of graphene and/or graphene oxide makes the injection blow moulding possible). For example, when the injection point is very small, such as when using nanoparticles, it is impossible to stress the part effectively during the crystallization phase, resulting in the formation of holes, cracking, higher contraction, and lower dimensional stability (as demonstrated above). This will affect the properties of the product, namely its resistance and antibacterial properties (linked to a bad dispersion too).

In products obtained through an injection or absorption process the transformations resulted in deformations of 16% and breaks in the stress-strain curve of the molecular dynamics as a result of the energy release when subjected to a voltage of 10% in the case of polyethylene terephthalate and deformations in the order of 20% and breaks in the stress-strain curve of the molecular dynamics as a result of the energy release when subjected to the same voltage of 10%. Nanoscale cracks lead to the material failing in regard to its antibacterial properties. In addition to the 16% and 20% deformation for polyethylene terephthalate and bioplastic respectively, a Stone-Wales defect was observed in both cases. This usually occurs during failure of graphite materials.

On the other hand, the product obtained by the process of this invention results in deformations in the order of 1% and without nanoscale cracks or cracks that compromise the material, thus maintaining the antibacterial characteristics. The strain-strain curve of the molecular dynamics clearly demonstrates the plasticity and the damage tolerance of this product when tension was applied to it. There were no other defects in this product, notably Stone-Wales defects as found in products obtained by other methods.

The current solutions are less efficient from a food safety and drug preservation standpoint compared to that found with this invention. In addition, they involve more processes and more materials in the manufacture of bottles and/or packaging for the distribution of food products, in particular liquids (e.g. milk, yogurts or fruit juices) and/or drugs. Comparing the present invention, which uses bioplastic to another solution using polyethylene terephthalate, the advantage to the environment is notable. The low environmental impact due to the fact that bioplastic, namely MATER-BI, is completely biodegradable and compostable. MATER-BI is in compliance with the European standard EN 13432 and accredited by independent entities in at least 5 countries (USA, Australia, Belgium, Germany and Italy).

To date there has not been a polyethylene terephthalate and graphene oxide and/or graphene oxide product obtained by any process other than the described extrusion or any other bioplastic product (with or without graphene and/or graphene oxide), that produces a material that:
a) is highly oxygenated and hydrophilic to the level demonstrated here, showing a 15% increase;
b) has thermoplastic properties that give rigidity, gloss, thermostability, photostability and are efficient as a barrier to gases, bacteria and water to the level demonstrated here, showing a 22% increase;
c) has excellent antibacterial properties due to the two-dimensional structure of the graphene layer making the plastic (whether bioplastic or polyethylene terephthalate) extruded and highly impermeable to air and water to the level demonstrated here, showing an increase of 22% (e.g. in a oxygen transmission rate test a bottle made by only PET shows values of 0.0714 cm³/(package·day) against values of 0.0594 cm³/(package·day) from a bottle with PET and 1% mass per mass of graphene and graphene oxide, although there has been observed a very poor dispersion of graphene and graphene oxide - the dispersion can be improved in the order of 800% using a screw with extra sections and ready to handle nanoparticles and adding the graphene and/or the graphene oxide in the last third of the barrel/screw, when the bioplastic pallets are already melted instead in the funnel, in the beginning of the process - with a good dispersion is possible to achieve a reduction of the oxygen permeability of approximately 99% when compared to packages without graphene and/or graphene oxide);
d) has a high dimensional stability, greater structural homogeneity, without degradation of polyethylene terephthalate or bioplastic and without formation of voids, shrinkage or counterparts in relation to all other polyethylene terephthalate and graphene and/or graphene oxide products obtained by other processes and/or the bioplastic with graphene and/or graphene oxide;
e) has a diffusion coefficient (m2 s-1) of graphene exceeding 9.41578E-13, which corresponds to a much higher diffusion (around 40%) than all other polyethylene terephthalate and graphene and/or graphene oxide products obtained by other processes or by bioplastic and ethylene and graphene and/or graphene oxide obtained by other processes (and the diffusion can be improved by adding the graphene and/or the graphene oxide in the last third of the barrel/screw, when the bioplastic pallets are already melted instead in the funnel, in the beginning of the process, and/or used a screw with extra divisions ready to mix nanoparticles);
f) has a porosity (pore size) of less than 5 nm and which is lower than the porosity observed in polyethylene terephthalate and graphene and/or graphene oxide obtained by other processes (in the order of 12 nm), resulting in a lower deleterious over ductility and resistance to fatigue;
g) has a porosity of less than 5 nm, which is lower than that observed in the bioplastic and graphene and/or graphene oxide materials obtained by other processes (around 12 nm), resulting in a lower deleterious effect on ductility and resistance to fatigue;
h) has a degree of homogenisation of graphene oxide in the polyethylene terephthalate film and graphene with no graphene oxide particles at the surface with more than 2 µm/mm 2, a value which is not achieved by other processes used to obtain a polyterephthalate product of ethylene and graphene and/or graphene oxide (the homogenesation can be improved adding the graphene and/or the graphene oxide in the middle or end of the compression zone of the screw or beginning of the metering zone of the screw - equivalent to the beginning of the last third part of the screw-, when the bioplastic pallets are already melted instead in the funnel, in the beginning of the process, and/or used a screw with extra divisions ready to mix nanoparticles);
i) has a degree of homogenization of graphene oxide in the bioplastic and graphene film with zero particles of graphene oxide at the surface greater than 2µm/mm2, a value that is not reached through other processes used to obtain a bioplastic and graphene product and/or graphene oxide (the homogenesation can be improved adding the graphene and/or the graphene oxide in the last third of the barrel/screw, when the bioplastic pallets are already melted instead in the funnel, in the beginning of the process, and/or used a screw with extra divisions ready to mix nanoparticles);
j) has a degree of homogenization of graphene oxide in the polyethylene terephthalate and graphene and/or graphene oxide film without reprecipitation of coarse graphene oxide particles, with 0/mm2 of surface graphene oxide particles greater than 2µm, values which are not obtained by other processes used to obtain a product of polyethylene terephthalate and graphene and/or graphene oxide (the homogenesation can be improved adding the graphene and/or the graphene oxide in the middle or end of the compression zone of the screw or beginning of the metering zone of the screw - equivalent to the beginning of the last third part of the screw-, when the bioplastic pallets are already melted instead in the funnel, in the beginning of the process, and/or used a screw with extra divisions ready to mix nanoparticles);
k) a degree of homogenization of the graphene oxide in the bioplastic film and graphene and / or graphene oxide without reprecipitation of coarse graphene oxide particles, with 0/mm2 of surface graphene oxide particles greater than 2µm, values which are not achieved by other processes used to obtain a bioplastic and graphene product and/or graphene oxide (the homogenesation can be improved adding the graphene and/or the graphene oxide in the last third of the barrel/screw, when the bioplastic pallets are already melted instead in the funnel, in the beginning of the process, and/or used a screw with extra divisions ready to mix nanoparticles);
l) has a degree of homogenization of graphene oxide in the polyethylene terephthalate and graphene and/or graphene oxide film with zero graphene oxide particles at the surface greater than 2µm, degree of homogenization not achieved by other processes used to obtain a product of polyethylene terephthalate and graphene and/or graphene oxide;
m) has a degree of homogenization of the graphene oxide in the bioplastic film and graphene and/or graphene oxide with zero particles of graphene oxide at the surface with more than 2µm, degree of homogenization not obtained through other processes used to obtain a bioplastic product and graphene and/or graphene oxide;
n) has a degree homogenization of the graphene oxide in the polyethylene terephthalate film and graphene and/or graphene oxide with zero graphene oxide particles at the surface greater than 2pm which increases the tensile strength of the film and decreases the possibility of cracking during the extrusion process, resulting in excellent extrudate quality and superior to the product of polyethylene terephthalate and graphene and/or graphene oxide not obtained by other processes;
o) has a degree of homogenization of graphene oxide in the film of bioplastic and graphene and/or graphene oxide with zero particles of graphene oxide at the surface greater than 2µm which increases the tensile strength of the film and decreases the possibility of cracking during the process of extrusion, resulting in an excellent quality and of the extruded product and much higher than the product of bioplastic and graphene and/or graphene oxide obtained by other processes;
p) has a ratio of the number of voids in the film thickness of polyethylene terephthalate and graphene and/or graphene oxide less than 0.1 voids/µm, considering pores smaller than 5 nm;
q) having a ratio of the number of voids in the film thickness of bioplastic and graphene and / or graphene oxide to less than 0.1 voids / µm, considering pores with sizes smaller than 5 nm;
r) has a film of polyethylene terephthalate and graphene and/or graphene oxide lower than a hardness of more than 5.0 gf/cm2;
s) the bioplastic film and graphene and/or graphene oxide has a hardness of more than 5.0 gf/cm 2;
t) the film of polyethylene terephthalate and graphene and/or graphene oxide has a resistance greater than 585 ± 50Q/sq (1cm x 1cm);
u) the bioplastic film and graphene and/or graphene oxide has a resistance greater than 585 ± 50Q/sq (1cm x 1cm). Finally, it should be noted that the technique closest to this one is described in Patent PT107398 A, which characterizes a film of polyethylene terephthalate and graphene and/or graphene oxide and its extrusion production method.

However, even if both polymers are being treated, the following should be taken into account:
Polyethylene terephthalate is a non-biodegradable polyester formed by the reaction between terephthalic acid and ethylene glycol at a density of 1.3 g cm-3 (20° C), a melting point higher than 250° C. It can be recycled but is neither biodegradable nor compostable.

Bioplastic, in particular Mater-Bi, is a thermoplastic obtained from poly (butylene terephthalate-co-butylene adipate), which is compostable and biodegradable as are all bioplastics, such as Mater-BI N which is obtained from poly (butylene adipate-co-terephthalate), among others.

The bioplastic, like Mater-Bi NF803 (N), has a modulus of elasticity of 230MPa measured by ASTM D882, maximum tensile strength 230MPa, tensile strength of 300%, melting point below 180° C.

The technique closest to the this one is that described in Patent PT107398 A. It uses polyethylene terephthalate, which is neither biodegradable nor compostable, unlike the aforementioned bioplastic. In addition, the mechanical and thermal characteristics of polyethylene terephthalate are so different from biodegradable and compostable bioplastics that the latter cannot yet be used for food packaging because of poor resistance and high permeability, unlike polyethylene terephthalate which is commonly used for this type of packaging. It's important to underline that is impossible to use the bioplastic (alone, without graphene and/or graphene oxide) in the injection blow moulding, unlike polyethylene terephthalate which is commonly used in that kind of processes, namely but not exclusively to produce bottles.

Regarding the characteristics of the bioplastic, the amounts of graphene oxide and/or graphene claimed are those which enable the film present in this invention to be obtained, the quantities claimed in Patent PT107398 A, especially at the upper limits, making it impossible to produce this film due to high viscosity (and consequently bad dispersion of the graphene and graphene oxide) which would result from the addition of graphene oxide or graphene in the percentages claimed.

Thus, it can be stated, without doubt, that the present invention achieves a completely different product from those currently known, and the actual stat of art does not shows any evidence of a solution near to the solution proposed in this invention - which requires thousands of tests and small changes to discover the quantity (range) of graphene and/or graphene oxide suitable to reach the results claimed.

### Detailed description of the invention:

The extrusion process consists of depositing graphene and/or graphene oxide (1) and bioplastic (2) in a funnel (8) in the form of granules, powder or in aqueous solution (although not restricted) which, by gravity, slides into a tube (9) where a screw thread (6) is installed. The thread is rotated by a motor (5) installed at one end of it (6). The graphene and/or graphene oxide (1) and bioplastic (2) is carried and fed into the barrel of the tube (9) to the dosing zone (4) . The drum of the tube (9) contains a heated cylinder (7) which heats graphene and/or graphene oxide (1) and bioplastic (2) up to its melting point that continues to be transported by the screw thread (6) to a compression zone caused by the grooves of the screw becoming progressively smaller (6) and/or the widening of the cylinder (7) and thus pushing graphene and/or graphene oxide (1) and the bioplastic (2), which have melted in a mixture of bioplastic and graphene (3) as homogeneously as possible against the walls of the barrel of the tube (9). This occurs until the mixture of bioplastic and graphene (3) is thrown by force due to the pressure generated into a dosing zone (4). The mixture comes out in the form of bioplastic film and graphene and/or graphene oxide.

During the extrusion process a liquid dye may be added to graphene and/or graphene and bioplastic oxide. The liquid dye may have between 0.002% and 20% by weight of graphene and/or graphene oxide.

The film of bioplastic and graphene and/or graphene oxide can then be filtered of impurities (e.g with wax), cooled and shaped into the desired shape, particularly, but not exclusively, in the form of bottles and packages.

The graphene and/or the graphene oxide can be add in the middle or end of the compression zone of the screw (6) or beginning of the metering zone of the screw (6) - equivalent to the beginning of the last third part of the screw (6)-, when the bioplastic pallets are already melted instead in the funnel (8), in the beginning of the process, and/or used a screw (6) with extra divisions ready to mix nanoparticles) in order to grant a better dispersion (homogeneity) of the graphene and/or graphene oxide (1) in the bioplastic (2).

One of the fundamental differences of the present invention compared to other known ones, such as the film obtained by the injection process, is that the bioplastic and graphene film and/or graphene oxide can then be filtered of impurities, cooled and molded into the in particular, but not exclusively, in the form of bottles and packaging (that generally required a injection blow moulding process).

One of the other significant differences of the present invention compared to those already available is the fact that the bioplastic and graphene and/or graphene oxide fused results in a high viscosity fluid which, according to extrusion speed and melting temperature, allows the swelling to be controlled of the extrudate upon exiting the matrix so that it can be molded. On the other hand, when injecting graphene into the bioplastic or polyethylene terephthalate, the injection is applied to a mold without the possibility of molding or viscosity control.

This invention, unlike those already known, is a film/composite of bioplastic and graphene and/or graphene oxide in which the dispersion of graphene in the bioplastic is less than 3 nm in diameter and, in the case of graphene oxide, is less than 23nm in diameter.

It's important underline: the graphene and/or the graphene oxide can be add in the last third of the barrel/screw, when the bioplastic pallets are already melted instead in the funnel, in the beginning of the process, and/or used a screw with extra divisions ready to mix nanoparticles) in order to grant a better dispersion (homogeneity) of the graphene and/or graphene oxide in the bioplastic.

### The problem:

Existing solutions for packages and bottles, including those which may be produced by injection or absorption processes to include an extra layer of graphene and/or graphene oxide, for the preservation and distribution of food products, such as liquids (e.g. milk, yogurts or fruit juice) and/or medicinal products, are not very efficient when exposed to to the food product for long periods or subjected to pressure or folding. In order to make them more efficient and safer they are subject to more complex and costly processes, in particular through the application of layers of other plastics or aluminum.

In addition, current food preservation solutions use polyethylene terephthalate that although recyclable, is not biodegradable and thus presents a major risk to the environment. The bioplastic is biodegradable and compostable.

### The Benefits:

### Food safety

The characteristics of graphene and graphene oxide described above allow, by melting it with the bioplastic according to the extrusion process explained in detail above, to obtain a bioplastic film which can be used in the manufacture of bottles and/or packaging for distribution of food products with greater resistance, greater impermeability and better antibacterial performance. Moreover, due to its biodegradable and compostable characteristics it has little environmental impact unlike the other solutions which are one of the biggest problems of today's society.

### Economic advantages

The present invention of a film of bioplastic and graphene and / or graphene oxide that can be molded to produce bottles and / or packages for the distribution of food products, in particular liquids, allows reduced production costs (without loss of efficiency) due to the use of a simpler, less time-consuming process involving the use of less material. In addition to graphene itself and/or graphene oxide, it may cost less than the raw materials used in other solutions if produced (or extracted from nature) in industrial quantities.

In addition, the process of adding and melting the graphene and/or graphene oxide to the bioplastic allows for greater control of the viscosity of the material obtained. Therefore, a better modulation of the material for the desired end product is achieved, compared to the techniques known so far.

An increased dimensional stability, structural homogeneity, no degradation of the bioplastic and no formation of voids, shrinkage or counterparts during this process compared to that known so far avoids further waste, and thus has economic advantages.

### Environmental Advantages

The present invention relates to a film of bioplastic and graphene and / or graphene oxide which can be shaped to produce bottles and / or packages for the distribution of food products, in particular liquids, owing to the characteristics described above, in particular due to the covalent attachment of atoms resulting from the hexagonal arrangement which tends to be a strong bond, allows for greater strength resulting in less waste.

In addition, several studies have shown that graphene and graphene oxide are ecologically innocuous, for example, Salas, Sun, Luttge & Tour, "Reduction of Graphene Oxide via Bacterial Respiration," American Society of Chemistry (2010). This combined with the fact that the bioplastic is biodegradable and compostable, the final product has a low environmental impact, and that will solve one of the biggest problems currently facing the environment, which is the excess of plastic.

### Industrial application:

Despite the fact that very few companies have the capacity to produce graphene and/or graphene oxide at an industrial level, there is at least one Italian company (Nanesa) that has been working for more than 8 years on projects with graphene. This project is headed by one of the inventors of this product, with the capacity to produce over 3 tons per year of manometric materials, namely the so-called Nanesa Nano Platelets of Graphene (G2Nan) and the Nanexa Graphene Oxide (GONan). Therefore, the present invention has industrial application.

### In the drawings:

The present invention will now be explained in more detail with the aid diagrams, in which:

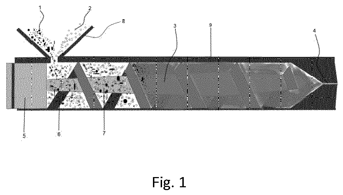

Fig. 1 is shown in a vertical longitudinal section where the entire extrusion process is observed and the graphene and/ or graphene oxide (1) and the bioplastic (2) are mixed until it melts in a mixture of bioplastic and graphene (3) more homogeneous.

Referring to the drawing in Fig. 1, wherein said extrusion process is graphically represented and in graphical graphene oxide and / or graphene oxide (1) and the bioplastic (2) are deposited in a funnel (8) in the ratio between 1.25% to 3.90% graphene and / or graphene oxide (1) of the amount of bioplastic (2), which by gravity slides into a tube (9) where a screw thread (6) is installed, which is rotated by a motor (5) installed at one end of the screw thread (6). The graphene and / or graphene oxide (1) and the bioplastic (2) are carried inside the barrel of said tube (9) the dosing zone (4). The drum of said tube (9) contains a heated cylinder (7) which heats graphene and / or graphene oxide (1) and bioplastic (2) up to its melting point and which continue to be transported by a screw (6) to a compression zone promoted by the progressive reduction of the screw grooves (6) and/or the widening of said cylinder (7) thereby pushing the graphene and/or graphene oxide (1) and the bioplastic (2), in the meantime melted in a mixture of bioplastic and graphene (3) as homogeneous as possible against the walls of said barrel of said pipe (9), until said mixture of bioplastic and graphene (3) is thrown by force of pressure generated into a dosing zone (4) eventually leaving in the form of bioplastic film and graphene and / or graphene oxide.

The graphene and/or the graphene oxide (1) can be added in the middle or end of the compression zone of the screw (6) or beginning of the metering zone of the screw (6) - equivalent to the beginning of the last third part of the screw- where the bioplastic pallets (2) are already melted, instead in the funnel (8), in order to grant a better dispersion (homogeneity) of the graphene and/or graphene oxide in the bioplastic.

During the extrusion process a dye may be added to graphene and / or graphene oxide (1) and bioplastic (2).

The dye can have a weight that is 0.001% to 20% of that of the graphene and/or graphene oxide (1).

The dye may be a solid or liquid masterbatch.

The mentioned addition of the dye colors the bioplastic (2) and attenuates or changes the predominant dark color provoked by the presence of the graphene.

## Claims

1. A process for obtaining a bioplastic and graphene oxide compound that is **characterized by** the following steps: adding between 1.25% and 3.90% (mass per mass percentage) of graphene oxide (1) to the bioplastic (2) where the graphene oxide (1) is melted and homogeneously dispersed in the bioplastic (2).

2. A process for producing a bioplastic and oxide compound according to Claim 1, **characterized by** adding polyethylene terephthalate and/or 0.01% to 5% (mass per mass percentage) of graphene.

3. A process for producing a bioplastic and graphene compound **characterized by** the following steps: adding from 1.25% to 4.50% (mass per mass percentage) of graphene (1) to the bioplastic (2) by means of melting where the graphene (1) is fused and dispersed homogeneously in the bioplastic (2).
